(19) Europäisches Patentamt
European Patent Office
Office européen des brevets

(11) **EP 4 611 243 A1**

(12) **EUROPEAN PATENT APPLICATION**

(43) Date of publication:
**03.09.2025   Bulletin 2025/36**

(21) Application number: **24160724.1**

(22) Date of filing: **29.02.2024**

(51) International Patent Classification (IPC):
**H02M 3/335** (2006.01)     **H02M 1/34** (2007.01)
**H02M 1/00** (2006.01)

(52) Cooperative Patent Classification (CPC):
**H02M 3/33507; H02M 1/0058; H02M 1/342;**
H02M 3/01

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Infineon Technologies Austria AG**
**9500 Villach (AT)**

(72) Inventors:
• **CHANG, Ching-Tao**
**Taipei (TW)**
• **MAO, Mingping**
**Singapore 768081 (SG)**

(74) Representative: **Hersina, Günter et al**
**Schoppe, Zimmermann, Stöckeler**
**Zinkler, Schenk & Partner mbB**
**Patentanwälte**
**Radlkoferstrasse 2**
**81373 München (DE)**

(54) **CONVERTER WITH AUXILIARY CIRCUIT COMPRISING AN AUXILIARY SWITCH AND AN AUXILIARY CAPACITOR**

(57)   Embodiments comprise a converter, comprising a first primary terminal and a second primary terminal for coupling the converter to a voltage source, a multi-winding inductor, comprising a primary winding and a secondary winding. Furthermore, the converter comprises a main switch wherein the primary winding and the main switch are connected in series between the first and second primary terminal. The converter further comprises a first secondary terminal and a second secondary terminal for coupling the converter with a load, an auxiliary circuit comprising an auxiliary switch, an auxiliary capacitor, wherein the auxiliary switch is connected in series with the auxiliary capacitor and a charge storage circuit comprising an output capacitor, wherein the output capacitor is arranged between the first and second secondary terminal. The charge storage circuit and the auxiliary circuit are connected in parallel to the secondary winding of the multi-winding inductor.

Fig. 5

**Description**

<u>Technical field</u>

Embodiments comprise a converter with an auxiliary circuit, comprising an auxiliary switch and an auxiliary capacitor, for example to exploit leakage inductance energy.

Embodiments are related to a flyback ZVS (zero voltage switching) PWM (pulse width modulation) operation and in particular respective converters, controllers and converter systems.

<u>Background</u>

A Flyback topology is a known solution for a Switched Mode Power Supply (SMPS) and is very popular in consumer and industry applications. Higher power conversion efficiency and higher power density is a trend to fulfil marketing requirements. Zero voltage switching (ZVS) has been proven a very effective way to reduce switching losses and enable higher operating frequencies. Reuse of the secondary side synchronous rectifier (SR) switch to create the ZVS turn on condition for a primary switch is a solution to improve the system efficiency and enable higher operating frequency.

In accordance with such conventional solutions, the controller at the secondary side senses the voltage across the SR switch, wherein before the primary side switch is turned on, at the moment that the valley point of secondary side SR switch is detected, the controller outputs a ZVS pulse to turn on the SR switch for a short while. Usually, this equals to half of the resonant period, thus the transformer at secondary side will be magnetized during this ZVS pulse and consequently the magnetizing inductance seen from the primary side will be reverse-magnetized.

After half of the resonant period, controller IC (integrated circuit) will end this ZVS pulse. Afterwards, after waiting for a short dead time, controller IC will send out the command to turn on the primary side switch. During this dead time, the reverse magnetizing current will keep flowing through the magnetizing inductance, and also through the primary side switch to discharge the intrinsic capacity Cp, and consequently a ZVS turn on condition can be created during this deadtime.

Nevertheless, this kind of ZVS implementation has big limitations. The challenge is that it depends on whether the energy collected during the ZVS pulse turn on phase is sufficient to discharge an intrinsic capacitor of the primary switch during the subsequent deadtime.

In some situations, for example at high input voltages, the ZVS condition cannot be established using conventional control strategies, which may lead to very high switching losses.

Hence, there is a need for an improved zero voltage switching concept for a converter.

Such a need is fulfilled by the subject matter of the independent claims.

Further embodiments are defined by the subject matter of the dependent claims of the present application.

<u>Summary</u>

Embodiments comprise a converter, e.g. voltage converter, e.g. flyback converter, comprising a first primary terminal and a second primary terminal for coupling the converter with a voltage source, a multi-winding inductor (e.g. two-winding inductor; e.g. a transformer), comprising a primary winding and a secondary winding, wherein, for example, the primary and secondary winding may not simultaneously comprise a current under the assumption of ideal coupling.

Furthermore, the converter comprises a main switch (e.g. Main FET, e.g. primary side MOSFET), wherein the primary winding and the main switch are connected in series between the first and second primary terminal, wherein the first and second primary terminal are, for example, input terminals of the converter, which are configured to be coupled with an input voltage source, e.g. Vin.

The converter further comprises a first secondary terminal and a second secondary terminal for coupling the converter with a load, an auxiliary circuit comprising an auxiliary switch, e.g. ZVS FET, an auxiliary capacitor, e.g. referred to herein with capacitance Cz, wherein the auxiliary switch is connected in series with the auxiliary capacitor. The converter further comprises a charge storage circuit comprising an output capacitor, wherein the output capacitor is arranged between the first and second secondary terminal.

The charge storage circuit and the auxiliary circuit are connected in parallel to the secondary winding of the multi-winding inductor.

For many converter applications, it is beneficial to have a galvanic isolation between an input and an output of the converter. As an example and in accordance with some embodiments, a flyback converter comprises a primary side winding and a secondary side winding, wherein, via magnetic coupling, galvanic isolation is achieved. In an on state, the primary side winding may be provided with a current, hence, increasing magnetic flux in the winding. In an off state, the current may be shut off, so that the magnetic flux drops. Via magnetic coupling, in reaction to the magnetic flux change, a current may be induced in the secondary sided winding.

However, apart from such desired magnetic coupling, converters comprise further coupling effects, wherein current "leaks" from primary to secondary side and vice versa. For the example of the flyback converter, in the on state, some current may be already induced in the secondary winding, via parasitic inductances and vice versa in the off state from the secondary side to the primary side.

It's recognized that instead of being only a parasitic side effect, such energy leaked from one side to another can be exploited to improve the overall efficiency of the converter. An auxiliary circuit may be provided comprising the auxiliary capacitor which allows storing energy leaked from the primary side, for example, when the main switch is in an on state. It's further recognized that such energy stored, may be used efficiently using a switch, namely the auxiliary switch in order to coordinate when the stored energy is released.

The energy, leaked from primary to secondary side may be used in order to achieve a zero voltage switching condition for the main switch by intentionally allowing the energy stored in the auxiliary capacitor to leak back to the primary side, in order to discharge the main switch. Hence, voltage free switching at a desired point in time may be achieved for the main switch, which allows reducing switching losses.

Hence, a core idea according to embodiments is to leverage the leakage inductance energy at the secondary side and to "recycle" it at the secondary side auxiliary capacitor (e.g. a clamping capacitor). This auxiliary capacitor may be charged each time when the main switch, e.g. a primary MOSFET, is turned on. Before turning on the main switch, the auxiliary switch at the secondary side can be turned on, to let the auxiliary capacitor start resonating with the leakage inductance of the converter (an optionally the stray capacitance of the main switch), in order to create a negative current flowing through main switch, e.g. in particular its stray capacitance, e.g. parasitic capacitance, to thus to establish the ZVS condition. Hence, embodiments are in particular related to an innovative way to implement flyback ZVS PWM operation.

**Brief Description of the Drawings**

The drawings are not necessarily to scale, emphasis instead generally being placed upon illustrating the principles of embodiments. In the following description, various embodiments are described with reference to the following drawings, in which:

Fig. 1     shows a schematic view of a converter according to embodiments;

Fig. 2     shows a schematic view of a circuit diagram of a converter according to an embodiment;

Fig. 3     shows the circuit diagram of Fig. 2 at an initial status, according to an embodiment;

Fig. 4     shows a schematic view of signals of the converter over time according to embodiments;

Fig. 5     shows a schematic view of the circuit diagram of Fig. 2 at the time T1 according to Fig. 4;

Fig. 6     shows a schematic view of the circuit diagram of Fig. 2 between the times T1 and T2 according to Fig. 4;

Fig. 7     shows a schematic view of the circuit diagram of Fig. 2 at the time T2 according to Fig. 4;

Fig. 8     shows a schematic view of the circuit diagram of Fig. 2 between the times T2 and T3 according to Fig. 4;

Fig. 9     shows a schematic view of the circuit diagram of Fig. 2 at time T3 according to Fig. 4;

Fig. 10    shows, on the left hand side, schematic views of the circuit of Fig. 2 for the situations between T1 and T2 (top) and between T2 and T3 (bottom) and on the right hand side corresponding equivalent circuits;

Fig. 11    shows, on the top right hand side, a schematic view of the circuit of Fig. 2 at T1, highlighting an example for controlling a switching of the auxiliary switch, according to an embodiment and on the left hand side, the signals as shown in Fig. 4;

Fig. 12    shows, on the right hand side, a schematic view of the circuit of Fig, 2 at T2, highlighting an example for controlling a switching of the auxiliary switch, according to an embodiment and on the left hand side, the signals as shown in Fig. 4;

Fig. 13    shows the signals as discussed in the context of Fig. 4, wherein an optional method to identify the top of $V_{Cz}$ is indicated in the plot of $V_{CZ}$ in accordance with an embodiment;

Fig. 14    shows a schematic view of the equivalent circuit between T1 and T2 as shown in Fig. 10 and the signals as shown in Fig. 4 in comparison, with highlighted Vcp12(t) between T1 and T2 in the signal plot of the Main $V_{DS}$;

Fig. 15    shows a schematic view of a converter system comprising a converter and a controller for controlling the converter according to an embodiment; and

Fig. 16    shows a schematic block diagram of method for controlling a converter according to an embodiment.

## Detailed Description of the Embodiments

Equal or equivalent elements or elements with equal or equivalent functionality are denoted in the following description by equal or equivalent reference numerals even if occurring in different figures (e.g. 1xx and 2xx).

In the following description, a plurality of details is set forth to provide a more throughout explanation of embodiments. However, it will be apparent to those skilled in the art that embodiments may be practiced without these specific details. In other instances, well-known structures and devices are shown in block diagram form rather than in detail in order to avoid obscuring embodiments. In addition, features of the different embodiments described herein after may be combined with each other, unless specifically noted otherwise.

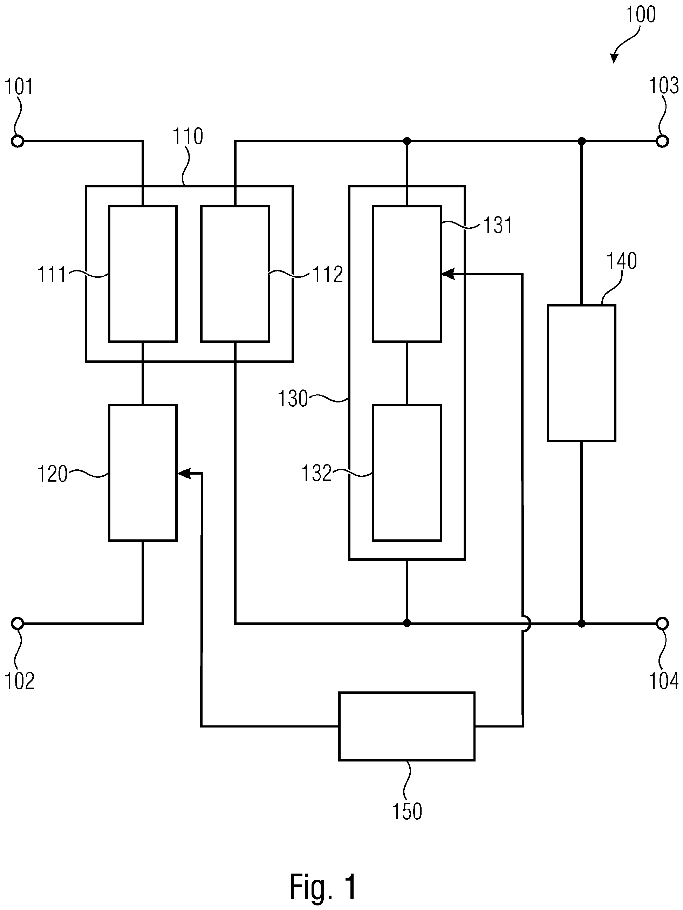

Fig. 1 shows a schematic view of a converter according to embodiments. Converter 100 comprises a first primary terminal 101 and a second primary terminal 102 for coupling the converter with a voltage source and a multi-winding inductor 110 (e.g. a transformer) comprising a primary winding 111 and a secondary winding 112. Furthermore, the converter 100 comprises a main switch 120 which is connected in series between the first and second primary terminal.

The converter 100 further comprises a first secondary terminal 103 and a second secondary terminal 104 for coupling the converter with a load and an auxiliary circuit 130 comprising an auxiliary switch 131 and an auxiliary capacitor 132, wherein the auxiliary switch 131 is connected in series with the auxiliary capacitor 132.

In addition, the converter 100 comprises a charge storage circuit 140 comprising an output capacitor, wherein the output capacitor is arranged between the first and second secondary terminal, wherein the charge storage circuit 140 and the auxiliary circuit 130 are connected in parallel to the secondary winding 112 of the multi-winding inductor 110.

In addition, an optional controller 150 for controlling the converter 100 is shown. The controller 150 may be configured to set the main switch 120 to an on state in order to store energy in the multi-winding inductor 110 and to set the main switch 120 to an off state in order to charge the charge storage circuit 130 using energy stored in the multi-winding inductor 110. As an optional feature, the controller may further be configured to change a state of the auxiliary switch 131, as indicated by the arrow from controller 150 to auxiliary switch 131.

The converter 100 may, for example, be a flyback converter. Furthermore, the multi-winding inductor 110 may comprise more than one secondary winding and/or even more than one primary winding. Optionally, the converter may be configured so that the primary and secondary winding do not simultaneously comprise a current under the assumption of ideal coupling. However, the multi-winding inductor 110 may as well be implemented in the form of a transformer, as well with more than one primary and/or secondary winding.

In general converter 100 may be used for voltage and/or for current conversion. Furthermore, in general switches may be implemented in the form of field-effect transistors, for example MOSFETs or JFET.

Optionally, the charge storage circuit 140 may additionally comprise a diode, for example between the auxiliary circuit 130 and one of the first secondary terminal and the second secondary terminals 103, 104.

When the main switch 120 is turned on, the leakage inductance seen from secondary side may resonate with the auxiliary capacitor 132 and hence the auxiliary capacitor may be charged by the leakage current. This allows improving a subsequent switching of the main switch, for example allowing to achieve a zero voltage switching (ZVS) condition.

Before turning on the main switch 120, e.g. also referred to as primary switch, the auxiliary switch 131 at secondary side may be turned on, to allow for the auxiliary capacitor 132, e.g. also referred to as clamping capacitor, to resonate with the leakage inductance. This may induce a negative current flowing through the main switch 120, to establish the ZVS condition.

In other words, the auxiliary circuit 130 may be configured to store inductively leaked energy from a primary side of the converter in the auxiliary capacitor 132, when the main switch 120 is in an on state. Furthermore, for example subsequently, the auxiliary circuit 130 may be configured to discharge a residual voltage of the main switch 120, by inducing a current in the primary side of the converter, by discharging the auxiliary capacitor 132, when the auxiliary switch is in the on state and when the main switch is in an off state.

Hence, the controller 150 may be configured to, in a first switching state of the converter 100, set the main switch 120 to the on state and the auxiliary switch 131 to the on state, so as to store inductively leaked energy from a primary side of the converter 100 in the auxiliary capacitor 132 and to, in a second switching state of the converter 100, set the auxiliary switch 131 to the on state and the main switch 120 to the off state, so as to discharge a residual voltage of the main switch 120, by inducing a current in the primary side of the converter 100, by discharging the auxiliary capacitor 132.

Another very important advantage according to at least some embodiments is that the collected energy to discharge the main switch 120, e.g. its parasitic capacitance, may be automatically following the input bus voltage. For example at high line input condition, more energy may be needed to discharge the main switch, to ensure ZVS condition. Embodiments may allow providing such sufficient energy, over the whole input bus voltage range (e.g. meaning that the auxiliary circuit may provide ZVS functions well with input range of 127 to 373Vdc), to implement ZVS condition.

However, with regard the collected energy during the period of T2 and T3 for discharging the stray capacitance of the main switch, referred to in the following as main FET's Coss, during the coming T1 and T2, it is to be noted that: Logically, the auxiliary capacitor, e.g. referred to as Cz, an initial voltage of which may be 0V, may harvest the leaked inductor energy from turning on main FET at beginning. Then, the auxiliary switch, also referred to as ZVS FET, may start turning on to discharge the stored energy on Cz, which may initiate resonating with the leakage inductor Lr. The first period of resonant current may be used to discharge the main FET's Coss, and the second period of resonant current may be used to recover Cz's voltage for the coming main FET's Coss discharging.

Furthermore, in general as an optional feature, the secondary winding, the auxiliary circuit and the charge storage circuit may be connected in parallel between the first and second secondary terminal.

In the following a concept according to embodiments is explained in different words:
According to some embodiments the leakage inductance energy at the secondary side (e.g. the circuit section coupled with secondary winding 112) is leveraged and recycled by the secondary side auxiliary capacitor (e.g. 132, e.g. also referred to as clamping capacitor). This auxiliary capacitor, e.g. clamping capacitor, may be or will be charged, for example each time, when the main switch (120) is turned on. Before turning on the main switch (120), the auxiliary switch (e.g. 131) at the secondary side is turned on, to let the auxiliary capacitor (e.g. clamping capacitor) start resonating (e.g. to become resonant) with the leakage inductance (e.g. referred to as Lr in the following). This creates a negative current flowing through capacitor Cp of the main switch (120) to establish the ZVS condition. Cp is also referred to Coss, e.g. the parasitic capacitance of the switch in the off state.,

According to embodiments, the auxiliary capacitor (132, also referred to a clamping capacitor), serially connected to the auxiliary switch (131), is implemented or added across transformer secondary side (e.g. inter alia, compared to conventional approaches). For example each time, when the main switch 120), e.g. primary MOSFET, is turned on (e.g. set to an on state), the leakage inductance seen from secondary side may and/or will resonate (e.g. become resonant) with this auxiliary capacitor, and actually charge the auxiliary capacitor accordingly. In other words, the energy stored in the leakage inductance may be and/or will be passed to this auxiliary capacitor.

Before turning on the main switch 120 (e.g. primary MOSFET), this auxiliary switch 131 at secondary side may or will be forced to turn on, e.g. for a short while, so that the auxiliary capacitor 132 starts to resonate (e.g. to become resonant) with the leakage inductance. This may or even will create a negative current flowing through main switch Cp (e.g. the stray capacitance of the main switch, e.g. also referred to as primary MOSFET Coss), thus to establish the ZVS condition.

Hence, an advantage according to embodiments is that leakage inductance energy at secondary side can be recycled and stored in the auxiliary capacitor 132, and before turning on the main switch 120 (e.g. primary MOSFET), this auxiliary capacitor, e.g. clamping capacitor, may or will be discharged to create the ZVS condition for the main switch (e.g. primary side MOSFET).

The collected energy to discharge Cp (e.g. the stray capacitance of the main switch Cp, also referred to as Coss) follows automatically the input bus voltage. For example, for high input voltages, more energy across Cp may be required to be discharged to ensure ZVS condition. According to embodiments, sufficient energy can be ensured, over the whole input bus voltage range, to implement ZVS condition.

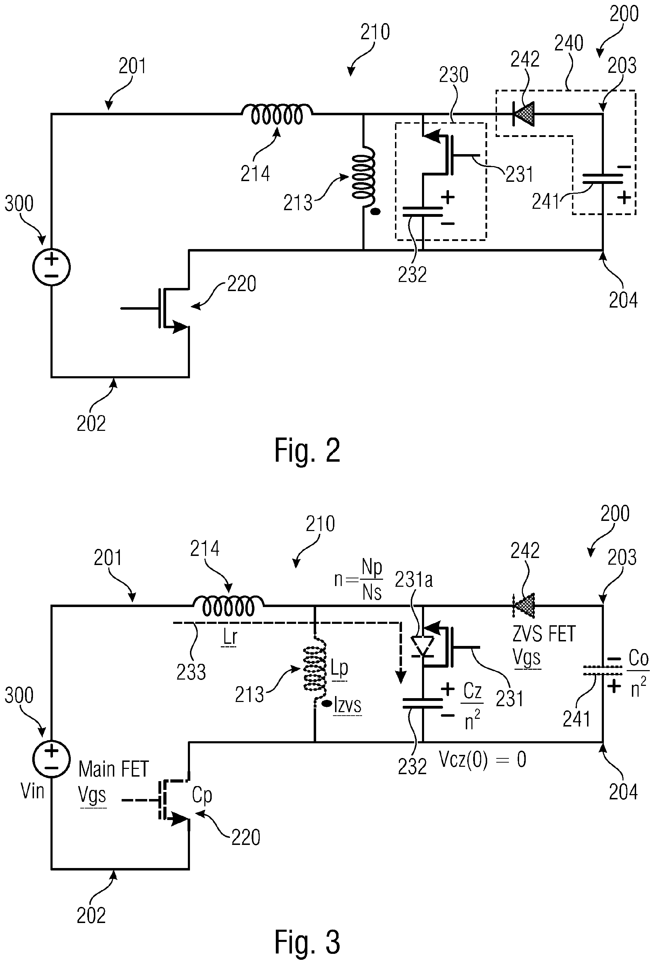

Fig. 2 shows a schematic view of a circuit diagram (e.g. related to the primary side) of a converter according to an embodiment. Fig. 2 shows converter 200 comprising a first primary terminal 201 and a second primary terminal 202, which are coupled to a voltage source 300.

The multi-winding inductor 210 (e.g. transformer) of the converter 200 is represented by its main inductance 213 and leakage inductance 214. Furthermore, the converter 200 comprises a main switch 220. The primary winding of the multi-winding inductor 210 and the main switch 220 are connected in series between the first and second primary terminal.

The converter 200 further comprises a first secondary terminal 203 and a second secondary terminal 204 for coupling the converter 200 with a load and an auxiliary circuit 230 comprising an auxiliary switch 231 and an auxiliary capacitor 232, wherein the auxiliary switch 231 is connected in series with the auxiliary capacitor 232.

In addition, the converter 200 comprises a charge storage circuit 240 comprising an output capacitor 241 and, as an optional feature, a diode 242, wherein the output capacitor 241 is arranged between the first and second secondary terminal, and wherein the charge storage circuit 240 and the auxiliary circuit 230 are connected in parallel to the secondary winding of the multi-winding inductor 210.

Elements 2xx shown in Fig. 2 and subsequent Fig 3 to 15 may, optionally, comprise same, similar or identical features and functionalities as elements 1xx shown in Fig. 1 and vice versa. For the sake of simplicity, a controller, as shown in Fig. 1, is not explicitly shown in Fig. 2 and subsequent Fig. 3 to 10. However, such a controller may be present as explained in the context of Fig. 1, having the respective functionalities as explained in the following.

Optional functionalities of embodiments according to Fig. 1 and 2 will now be discussed in more detail in different situations based on Fig. 3 to 15. For the sake of brevity, some elements may be addressed by their respective characteristic, e.g. auxiliary capacitor by Cz, output Capacitor by Co, e.g. main inductance by Lp, leakage inductance by Lr and main switch or respectively its stray capacitance or parasitic capacitance by Cp.

Fig. 3 shows the circuit diagram of Fig. 2 at an initial status, according to an embodiment.

As an example, a voltage of the voltage source (e.g. its amplitude) is indicated with Vin, the main switch 220 is shown, as an example, as a FET switch, referred to as Main FET, with a voltage Main Vgs, e.g. also referred to as Main $V_{GS}$ (e.g. Gate-Source voltage) and a parasitic capacitance of Cp.

The main inductance 213 is referred to, as an example, as Lp, the leakage inductance 214 is referred to, as an example, as Lr, the auxiliary switch 231 is shown, as an example, as a FET switch, referred to as ZVS FET, with a voltage ZVS Vgs, e.g. also referred to as ZVS $V_{GS}$ (e.g. Gate-Source voltage).

The auxiliary capacitor comprises, as an example, a (primary side referenced) capacitance of $Cz/n^2$, with n = Np/Ns, wherein Np is a number of windings of the primary winding and wherein Ns is a number of windings of the secondary winding. A voltage of the auxiliary capacitor 232 may be referred to as $V_{CZ}$. The output capacitor 241 comprises, as an example, a (primary side referenced) capacitance of $Co/n^2$.

At the initial status, Vcz is 0, e.g. as indicated by Vcz(0)=0, e.g. meaning *Vcz*(t=0)=0 (at a time t=0), hence, for example, at the beginning of the startup. The voltage across the ZVS capacitor 232 may be dominated by the input voltage Vin.

When the main FET 220 turns on at the beginning, the input voltage Vin may start charging Cz capacitor 232 of at initial 0V. The initial charge current, e.g. $I_{ZVS}$ 233, may be

$$Vin\sqrt{\frac{\frac{Cz}{n^2}}{Lr}}sin\left(\frac{t}{\sqrt{Lr\frac{Cz}{n^2}}}\right)$$

and Vcz may rise up to

$$Vcz\left(\pi\sqrt{Lr\frac{Cz}{n^2}}\right) = 2Vin$$

as the ZVS FET keeps turn-off (e.g. is still in an off state). However, the charge voltage may not have stabilized yet and the amplitude of Vcz may relate to the input voltage, e.g. Vin.

As indicated in Fig. 3, at initial startup, there may be no current through Lp (and as indicated in Fig. 3 no currents through diode 242 and output capacitor 241 - in contrast to main switch 220, leakage inductance 214 and the auxiliary circuit). The inductor property may be

$$Vin = Lp\frac{dip}{dt}$$

and capacitor' may be

$$Izvs = \frac{Cz}{n^2}\frac{dVcz}{dt}.$$

Because inductor's current ramps up by following the duration and main inductance (e.g. Lp) is very huge (e.g. comparatively), the inductor current may increase up slower than in the same period of time of the capacitor' which may not restrain the current change.

Hence, the auxiliary capacitor 232 may be charged, when the auxiliary switch 231 (e.g. ZVS FET), is off, since the charge current $I_{ZVS}$ may flow through the body diode 231a of the auxiliary switch (e.g. ZVS FET) while being turned off (e.g. while turning off, e.g. while being in an off state).

In other words, for example only at beginning status of Vcz may be 0V. The auxiliary capacitor, e.g. Cz, may harvest the energy by leaked current flows through the body diode 231a of the auxiliary switch 231, e.g. ZVS FET, in off state while the main switch 220, e.g. main FET, is in an on state (e.g. is turning on).

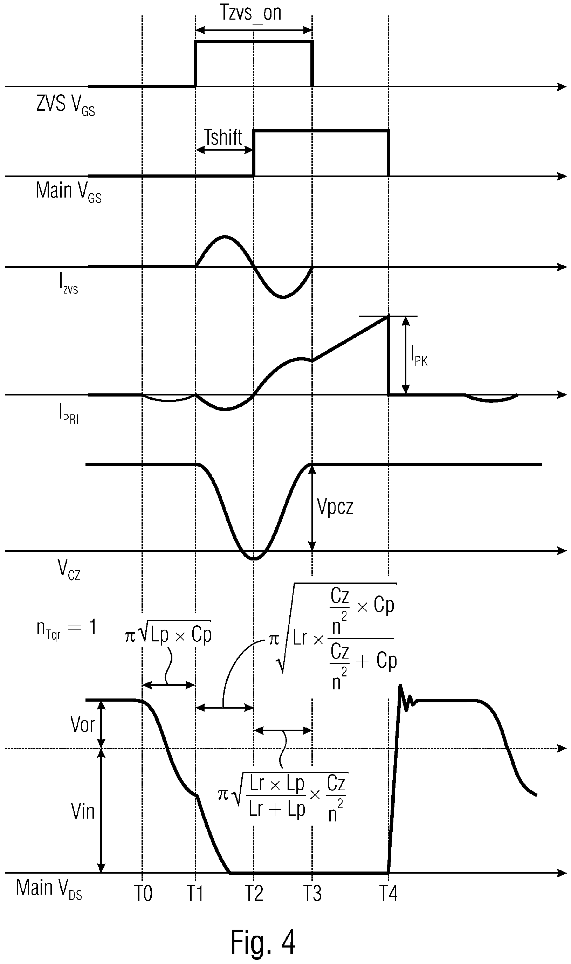

Next, referring to Fig. 4 to 9, a sequence of operations for a converter according to an embodiment is discussed.

Fig. 4 shows a schematic view of signals of the converter over time according to an embodiment. Fig. 4 shows, from top to bottom, the gate-source voltage of the auxiliary switch 231, ZVS $V_{GS}$, the gate-source voltage of the main switch 220, main $V_{GS}$, the current Izvs through the auxiliary circuit 230, the current $I_{PRI}$ through the main switch 220, the voltage $V_{CZ}$ of the auxiliary capacitor 232 and the drain source voltage Main $V_{DS}$ of the main switch 220. The signals are shown around different points in time T1, T2, T3 and T4.

As shown in Fig. 4, a converter 100, 200 according to an embodiment may comprise several switching states, which may be set by a corresponding controller, e.g. 150. In a first switching state, the main switch 120, 220 may be in an on state and the auxiliary switch 131, 231 may be in an on state (e.g. as shown between T2 and T3). In a second switching state, the auxiliary switch 131, 231 may be in an on state and the main switch 120, 220 may be in an off state (e.g. as shown between T1 and T2). In a third switching state, the auxiliary switch 131, 231 and the main switch 120, 220 may be in an off state (e.g. as shown before T1 and after T4). In a fourth switching state the auxiliary switch 131, 231 may be in an off state and the main switch 120, 220 in an on state (e.g. as shown between T3 and T4).

Hence, a respective controller, e.g. 150, may be configured to switch the converter 100, 200, in this order, e.g. in this sequence, e.g. without further switching states in between, from the third switching state to the second switching state, and from the second switching state to the first switching state and optionally, to switch the converter 100, 200, in this order, e.g. without further switching states in between, from the first switching state to the fourth switching state and from the fourth switching state to the third switching state.

In particular a respective controller may be configured to control the converter 100, 200 so that the converter 100, 200 cycles through some or even all of these switching states periodically.

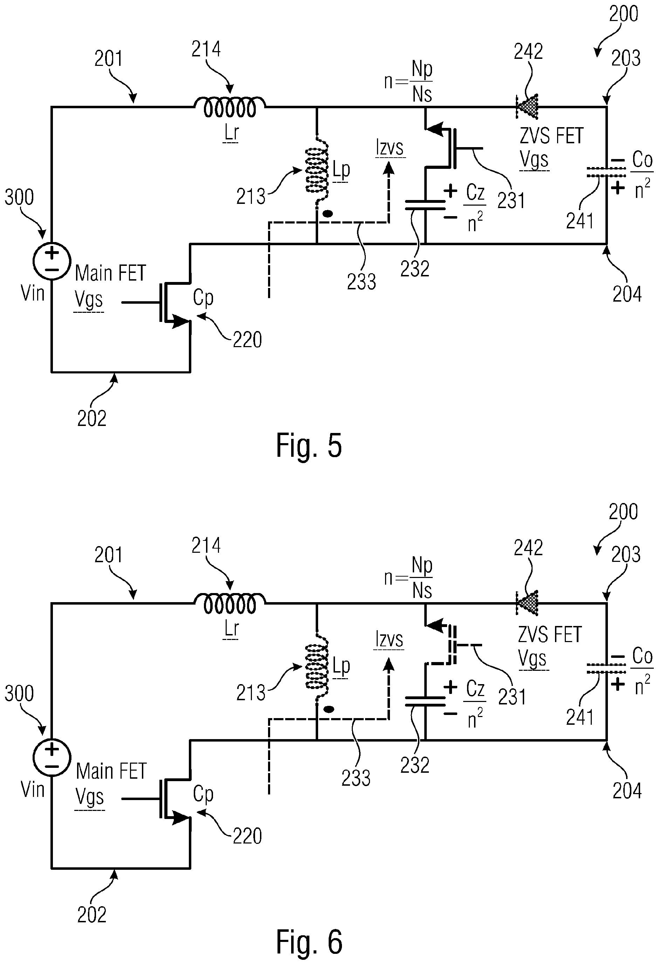

Reference is made to Fig. 5, showing a schematic view of the circuit diagram of Fig. 2 at the time T1 according to Fig. 4. At T1, the ZVS FET 231 may start turning on at the drain valley. Hence, at T1: When the ZVS FET 231 turns on at the first valley of drain voltage of the main FET 220, the steady voltage Vpcz on the capacitor Cz 232 may start discharging with the leakage inductance Lr.

The steady voltage Vpcz may be expressed by

$$Vpcz = \frac{VinLp(\frac{Cz}{n^2} + Cp)}{(Lr + Lp)\frac{Cz}{n^2}} - \frac{nVoCp}{\frac{Cz}{n^2}}.$$

As indicated in Fig. 5, at T1, currents may be flowing through leakage inductance 214, the auxiliary circuit and the main switch 220, but for example not through the main inductance 213, diode 242 and output capacitor 241.

Next, reference is made to Fig. 6, showing a schematic view of the circuit diagram of Fig. 2 between the times T1 and T2 according to Fig. 4. As shown, between T1 and T2, the ZVS current Izvs may be discharging Cp's residual voltage (e.g. the voltage of the stray capacitance of the main switch 220). Hence, from T1 to T2, the discharge current Izvs, which may be composed of (e.g. may be defined by or may be influenced by) the elements Cz and Lr (hence leakage inductance 214 and auxiliary capacitor 232) may flow through the main switch (e.g. main FET) in reverse direction to discharge the residual voltage across the stray capacitor Cp of the main FET 220. Izvs may be expressed as

$$Izvs(t) = -(Vpcz - nVo)\sqrt{\frac{\frac{Cz}{n^2}Cp}{Lr\left(\frac{Cz}{n^2} + Cp\right)}} \sin\left(\frac{t}{\sqrt{\frac{Lr\frac{Cz}{n^2}Cp}{\frac{Cz}{n^2} + Cp}}}\right).$$

The time between T1 and T2 is indicated in Fig. 4 as Tshift, hence an amount of time unit the main switch changes from the off state to the on state, and wherein the auxiliary switch is already in the on state.

As indicated in Fig. 6, between the time T1 and T2, currents may flow through main switch 220, leakage inductance 214 and the auxiliary circuit 230, but for example not through the main inductance 213, diode 242 and output capacitor 241.

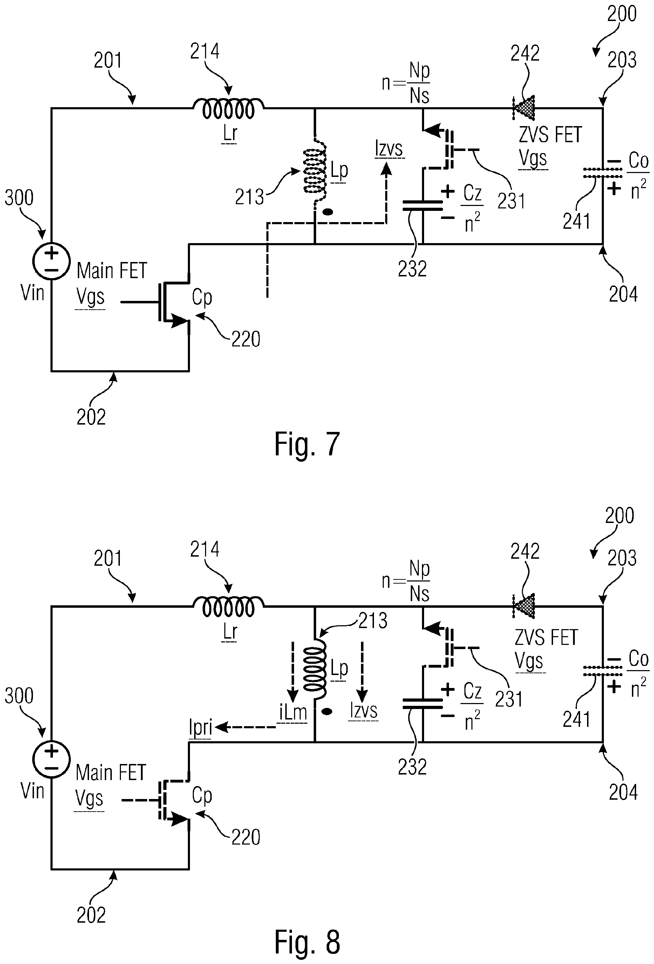

Next, reference is made to Fig. 7, showing a schematic view of the circuit diagram of Fig. 2 at the time T2 according to Fig. 4. As shown, the main FET 220 may start turning on at the bottom of Vcz (see Fig. 4). Hence, at T2: While Vpcz is being decreased to the bottom, the main FET 220 may start turning on because (e.g. based on an information indicating that) the residual voltage of Cp has been discharged to the lowest level (e.g. below a certain threshold, e.g. based on an analysis of the slope of $V_{CZ}$ being zero, or close to zero, e.g. indicating a minimum).

As indicated in Fig. 7, at T2, currents may flow through main switch 220, leakage inductance 214 and the auxiliary circuit, but for example not through the main inductance 213, diode 242 and output capacitor 241.

Next, reference is made to Fig. 8, showing a schematic view of the circuit diagram of Fig. 2 between the time T2 and T3 according to Fig. 4. As shown in Fig. 8 and Fig. 4, The ZVS current Izvs may restore the ZVS voltage Vpcz (see Fig. 4). Hence, between T2 and T3, the charge current Izvs may flow back to charge up the auxiliary capacitor, 232, Cz, to the previous voltage level and may then converge the magnetizing current iLm into the main FET 220. Current Izvs and voltage Vpcz may be expressed as:

$$Izvs(t) = \left( \frac{LpVin}{(Lr + Lp)} - Vpcz12(T2 - T1) \right) \sqrt{\frac{(Lr + Lp)}{LrLp} \frac{Cz}{n^2}} \, sin \left( \frac{t}{\sqrt{\frac{LrLp}{(Lr + Lp)} \frac{Cz}{n^2}}} \right)$$

and

$$Vpcz12(T2 - T1) = -2(Vpcz - nVo) \frac{Cp}{\left( \frac{Cz}{n^2} + Cp \right)} + Vpcz.$$

As indicated in Fig. 8, between T2 and T3, currents may flow through all shown elements apart from the output circuit.

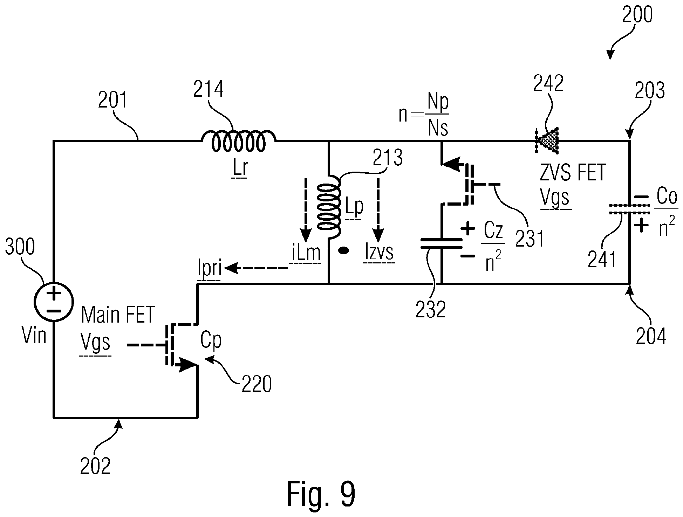

Next, reference is made to Fig. 9, showing a schematic view of the circuit diagram of Fig. 2 at time T3 according to Fig. 4. As shown in Fig. 9 and Fig. 4, ZVS FET 231 may start turning off at the restored Vpcz (see Fig. 4). Hence, at T3, while Vpcz is being restored, the ZVS FET may start turning off. The ZVS FET may be turned off at T3, in order to prevent Cz from discharging.

As indicated in Fig. 9, in this situation currents may flow through all shown elements apart from the output circuit.

In other words, in general, a controller 150 according to embodiments may be configured to switch the converter 100, 200 from the first switching state to the fourth switching state, in which the auxiliary switch 131, 231 is in an off state and the main switch 120, 220 is in an on state, based on an information indicating that a gradient of a voltage of the auxiliary capacitor is below a threshold.

In the following, some aspects of the above-discussed situations are explained in more detail.

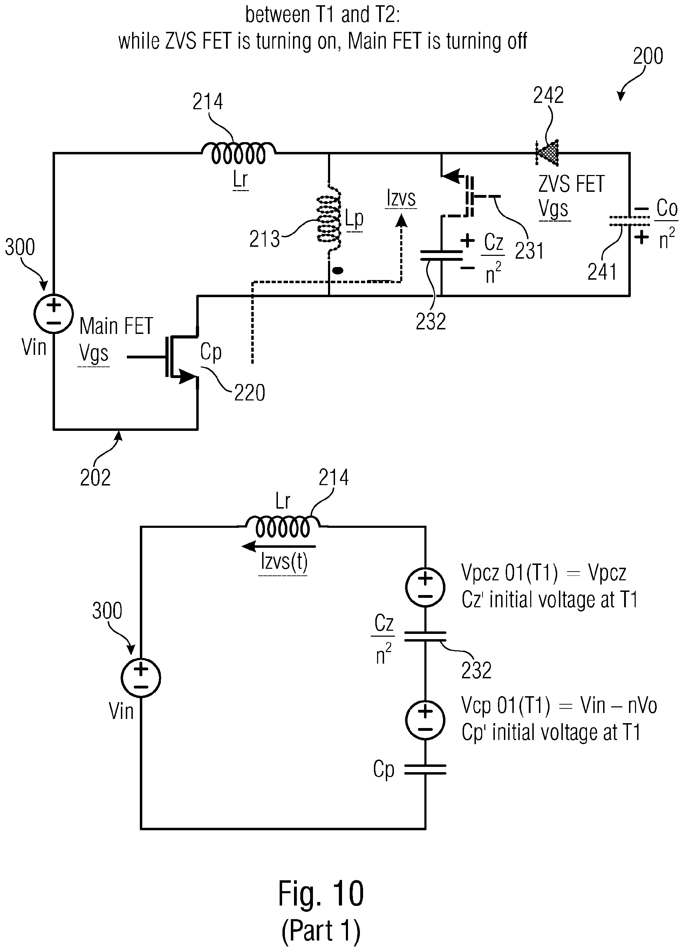

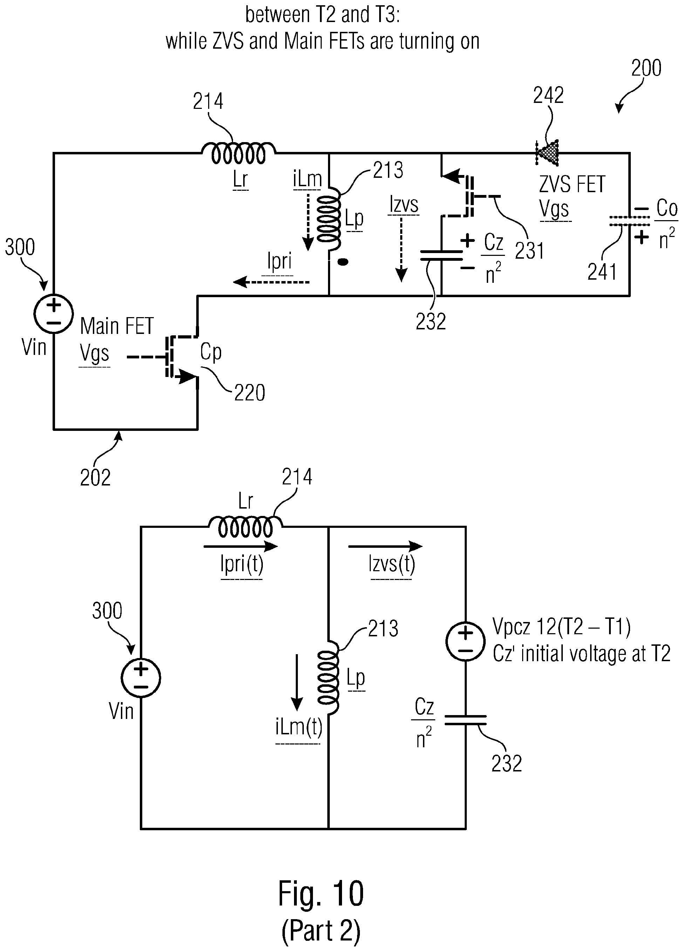

Reference is made to Fig. 10, showing, on the left hand side schematic views of the circuits as discussed above for the situation between T1 and T2 (top) and between T2 and T3 (bottom) and on the right hand side the corresponding equivalent circuits, for the situations between T1 and T2 (top) and between T2 and T3 (bottom). Fig. 10 highlights the difference between the situation between T1 and T2 and T2 and T3.

Between T1 and T2, IZVS may be expressed as

$$Izvs(t) = -(Vpcz - nVo) \sqrt{\frac{\frac{Cz}{n^2} Cp}{Lr(\frac{Cz}{n^2} + Cp)}} \, sin(\frac{t}{\sqrt{\frac{Lr \frac{Cz}{n^2} Cp}{\frac{Cz}{n^2} + Cp}}})$$

Between T2 and T3, IZVS may be expressed as

$$Izvs(t) = \left( \frac{LpVin}{(Lr + Lp)} - Vpcz12(T2 - T1) \right) \sqrt{\frac{(Lr + Lp)}{LrLp} \frac{Cz}{n^2}} \, sin \left( \frac{t}{\sqrt{\frac{LrLp}{(Lr + Lp)} \frac{Cz}{n^2}}} \right)$$

and VPCZ12 as

$$Vpcz12(T2 - T1) = -2(Vpcz - nVo)\frac{Cp}{\left(\frac{Cz}{n^2} + Cp\right)} + Vpcz.$$

Looking into the equivalent circuit of T1 and T2, the resonant current Izvs' time constant may be defined by or may be made of Lr series with the total capacitance in series of Cz and Cp and expressing by

$$\pi \sqrt{Lr \frac{\frac{Cz}{n^2} Cp}{\frac{Cz}{n^2} + Cp}}.$$

The stored initial voltage Vpcz on Cz may start building the discharge resonant current Izvs with Lr and Cp while ZVS FET 231 is conducting.

The discharge current has flowed through Main FET' Cp for discharging the residual voltage before Main FET 220 starts conducting.

However, at the period of T2 and T3, the time constant is the total inductance in parallel of Lr and Lp with series Cz, expressed by

$$\pi \sqrt{\frac{LrLp}{Lr + Lp}\frac{Cz}{n^2}}.$$

The discharge current Izvs may revert to Cz and may recover Vpcz (see Fig. 4).

The respective time constants are indicated in Fig. 4 between T1 and T2 and correspondingly between T2 and T3 in the Main $V_{DS}$ curve.

With regard to Fig. 10, it is to be noted that there may be some restrictions of timing sequences below: When ZVS FET 231 has started turning on, Main FET 220 may not allow turning on later than at T2. Otherwise, Cp may be charged up again by reverted Izvs. As to ZVS FET 231 turning off, the timing may not allow later than at T3. Otherwise, Cz may be discharged again.

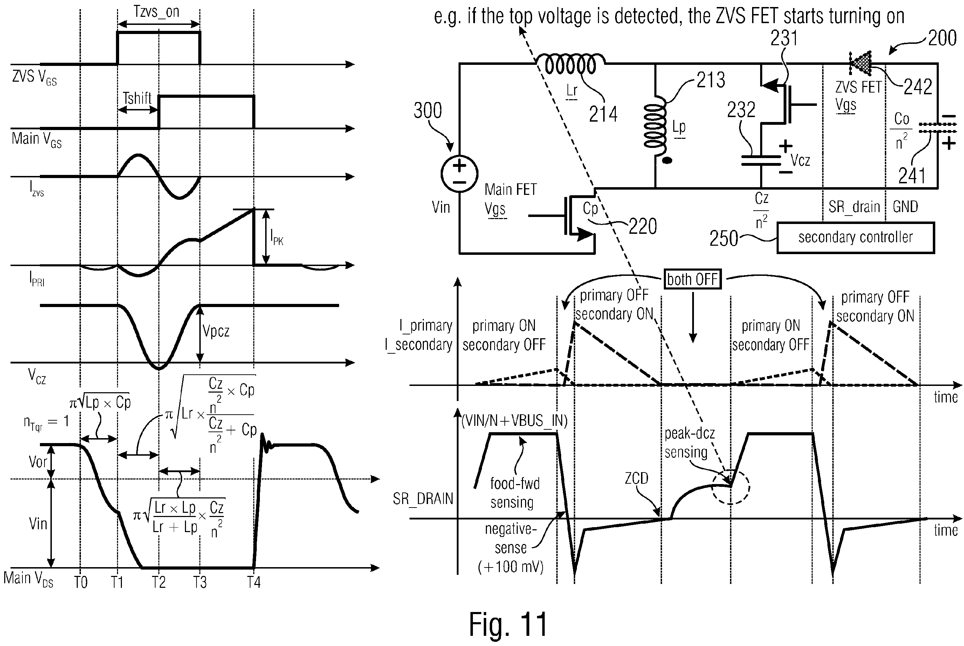

Next, reference is made to Fig. 11. Fig. 11 shows, on the top right hand side, a schematic view of the above-discussed circuit at T1, highlighting an example for controlling a switching of the auxiliary switch 231, according to an embodiment and on the left hand side, the signals as shown in Fig. 4. On the bottom right hand side, plots of the primary side current I_primary, and secondary side current, I_secondary, and the ZVS FET drain voltage is shown over time.

Hence, regarding the entities measured for controlling the circuit, or in other words, how the control signals determined, it is to be noted that, optionally, at T1, the top of DCM (e.g. discontinuous conduction mode) ringing may be identified. Hence, in other words, the ZVS FET 231 turning on at T1 may be determined by identifying the top or peak of DCM ringing voltage of SR drain (e.g. the drain voltage of the auxiliary switch 231, also referred to herein according to some embodiments as SR switch, or SR MOSFET). E.g. if the top voltage is detected (e.g. as indicated by Peak-det sensing), the ZVS FET may start turning on.

In Fig. 11 a secondary controller 250 is shown as an example. Secondary controller 250 may be part of the controller 150 as explained in the context of Fig. 1 or a separate control entity.

Hence, in general, a controller 150, 250 according to embodiments may be configured to switch the converter 100, 200 from the third switching state to the second switching state based on an information indicating a voltage peak of the auxiliary switch 131, 231, e.g. in order to further reduce a voltage drop over the main switch 120, 220 (e.g. discharge its stray capacitance), by inducing the current in the primary side of the converter, by discharging the auxiliary capacitor 232.

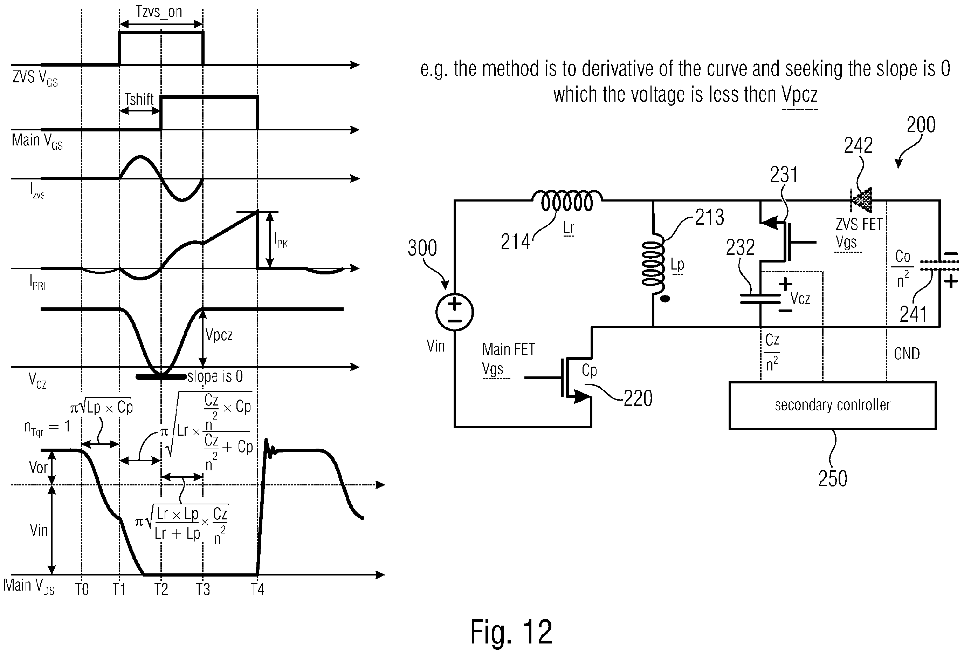

Fig. 12 shows, on the right hand side, a schematic view of the above-discussed circuit at T2, highlighting an example for controlling a switching of the auxiliary switch 231, according to an embodiment and on the left hand side, the signals as shown in Fig. 4. In Fig. 12, a secondary controller 250 is shown as an example. Secondary controller 250 may be part of the controller 150 as explained in the context of Fig. 1 or a separate control entity.

As indicated in Fig. 12 in the $V_{CZ}$ plot at T2, the bottom of Vcz may be identified based on the slope of $V_{CZ}$ being 0. The Main FET 220 turning on at T2 may hence be determined by directly seeking the bottom of Vcz voltage on Cz with the slope of Vcz' curve. E.g. the method used may be to derivative of the curve and seeking the slope is 0 which the voltage is less then Vpcz.

Hence, as an example, the gradient undercutting a threshold or being zero may be detected under the constraint that Vcz is smaller than Vpcz.

Hence, in general, a controller 150, 250 may be configured to switch the converter 100, 200 from the second switching state to the first switching state based on an information indicating that a voltage of the auxiliary capacitor 132, 232 reached a local minimum (and optionally is below an upper threshold, e.g. Vpcz, e.g. so as to store inductively leaked energy from the primary side of the converter in the auxiliary capacitor and to charge the auxiliary capacitor).

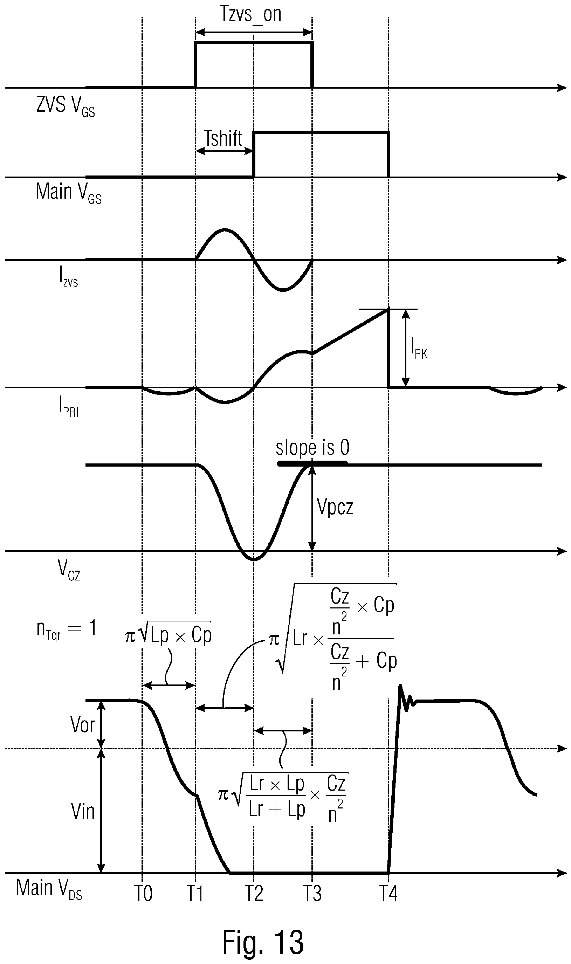

Next, reference is made to Fig. 13, showing the signals as discussed in the context of Fig. 4, wherein an optional method to identify the top of $V_{CZ}$ is indicated in the plot of $V_{CZ}$ in accordance with an embodiment. As shown in Fig. 13, at T3, to identify the top of Vcz, evaluation of the slope being 0 may be performed.

The ZVS FET 231 turning off at T3 may be determined by directly detecting the recovered Vcz voltage on Cz (hence e.g. the auxiliary capacitor 232). As an example, the method may be to derivative of the curve (e.g. Vcz) and seeking the slope is 0 which the voltage is equalled (e.g. within a certain tolerance) to Vpcz. In other words, under the constraint that Vcz is within a certain tolerance of Vpcz, a gradient of Vcz may be derived and analyzed, to find out whether the gradient is zero or below a threshold.

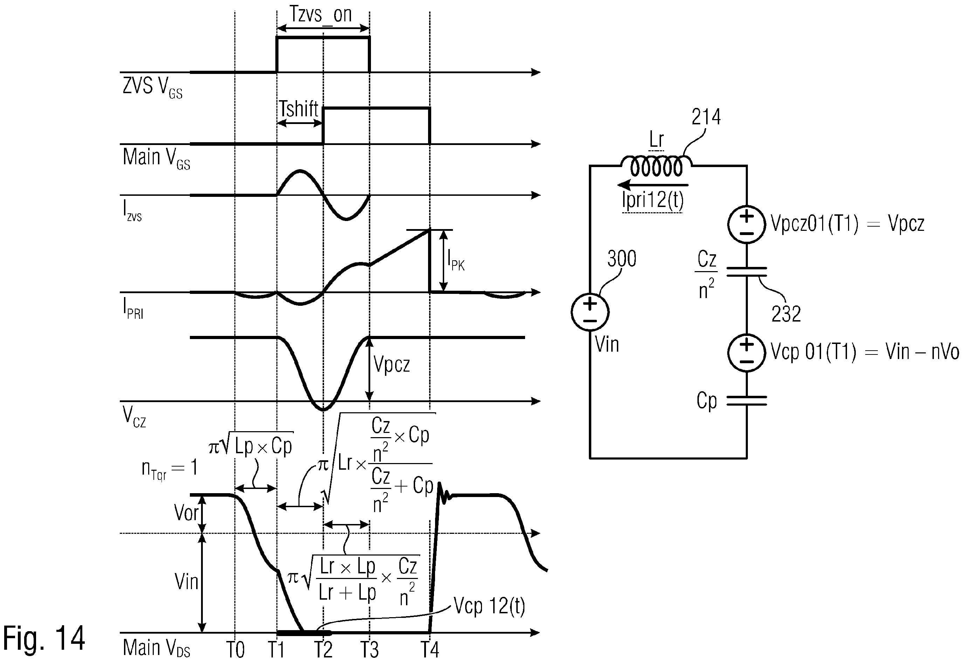

Next, reference is made to Fig. 14, showing a schematic view of the equivalent circuit between T1 and T2 as shown in Fig. 10 and the signals as shown in Fig. 4 in comparison, with highlighted Vcp12(t) between T1 and T2 in the signal plot of the Main $V_{DS}$.

Based on the voltage decreases between T1 and T2, the capacitance Cz may be

$$\frac{n^2 Cp\,(nVo - Vin)}{Vin + nVo - 2Vpcz}.$$

Therefore: Assuming Vcp12(t) decreases to 0V at T2 from T1, then the minimum required Cz capacitance is known. Ipri12(t) may be expressed as

$$Ipri12(t) = -(Vpcz - nVo)\sqrt{\frac{\frac{Cz}{n^2}Cp}{Lr\left(\frac{Cz}{n^2} + Cp\right)}}\sin\left(\frac{t}{\sqrt{\frac{Lr\frac{Cz}{n^2}Cp}{\frac{Cz}{n^2} + Cp}}}\right),$$

Vcp12(t) as

$$Vcp\,12(t) = \int_0^t \frac{Ipri12(t)}{Cp}\,dt + Vin - nVo$$

$$= \frac{(Vpcz - nVo)}{Cp}\sqrt{\frac{\frac{Cz}{n^2}Cp}{Lr(\frac{Cz}{n^2} + Cp)}}\sqrt{\frac{Lr\frac{Cz}{n^2}Cp}{\frac{Cz}{n^2} + Cp}}\left(\cos\left(\frac{t}{\sqrt{\frac{Lr\frac{Cz}{n^2}Cp}{\frac{Cz}{n^2} + Cp}}}\right) - 1\right) + Vin - nVo$$

$$= (Vpcz - nVo)\frac{\frac{Cz}{n^2}}{(\frac{Cz}{n^2} + Cp)}\left(\cos\left(\frac{t}{\sqrt{\frac{Lr\frac{Cz}{n^2}Cp}{\frac{Cz}{n^2} + Cp}}}\right) - 1\right) + Vin - nVo$$

Assume that at

$$t = T2 - T1 = \pi \sqrt{\frac{Lr\frac{Cz}{n^2}Cp}{\frac{Cz}{n^2} + Cp}},$$

the drain voltage of *Vcp* 12(*t*) is discharged to 0V during this period of time. Thus,

$$cos\left(\frac{t}{\sqrt{\frac{Lr\frac{Cz}{n^2}Cp}{\frac{Cz}{n^2}+Cp}}}\right) \text{ becomes to -1 with } t = \pi\sqrt{\frac{Lr\frac{Cz}{n^2}Cp}{\frac{Cz}{n^2}+Cp}},$$

The minimum required capacitance is assumed if Vpcz equals 2Vin at initial Vcz is 0V from charging up.

$$Vcp\,12\left(\pi\sqrt{\frac{Lr\frac{Cz}{n^2}Cp}{\frac{Cz}{n^2}+Cp}}\right) = 0$$

$$Cz = \frac{n^2 Cp\,(nVo - Vin)}{Vin + nVo - 2Vpcz}$$

If Vpcz=2Vin

$$Cz\_min = \frac{n^2 Cp\,(nVo - Vin)}{nVo - 3Vin}$$

Hence, according to an embodiment, the capacitance of the auxiliary capacitor 232 may be set according to Cz_min.

The above discussed the capacitance of the auxiliary capacitor 232 may be understood as a worst case estimation. In other words, in order to get the minimum required Cz, the worse conditions (e.g. compared to conditions in regular applications, e.g. compared to normal conditions) have been given by the above assumptions. Hence, the intention of the above may be to indicate that any Cz value should, at least according to some embodiments, be selected above the minimum required value.

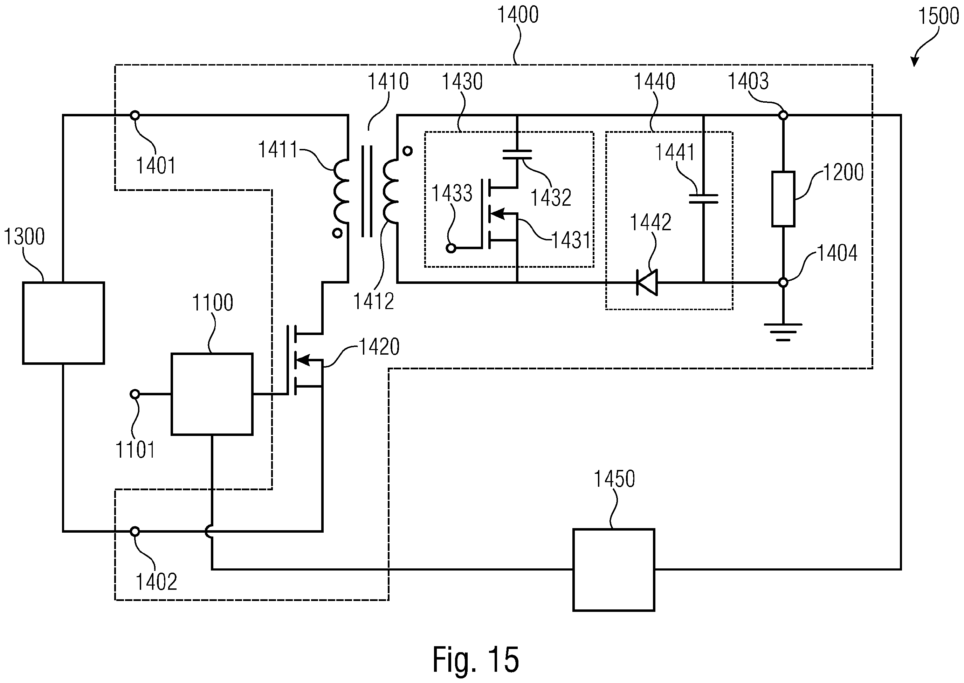

Fig. 15 shows a schematic view of a converter system comprising a converter and a controller for controlling the converter according to an embodiment. Fig. 15 shows converter system 1500 comprising the converter 1400 and the controller 1450. Converter 1400 may comprise same similar and/or identical features as converters 100 and/or 200. The same applies for respective components 14xx in comparison to corresponding components 1xx and 2xx.

Converter 1400 comprises a first primary terminal 1401 and a second primary terminal 1402 which are coupled to a voltage source 1300.

The multi-winding inductor 1410 (e.g. transformer) of the converter 1400 comprises a primary winding 1411 and a secondary winding 1412. Furthermore, the converter 1400 comprises a main switch 1420. The primary winding 1411 of the multi-winding inductor 1410 and the main switch 1420 are connected in series between the first and second primary terminal.

The converter 1400 further comprises a first secondary terminal 1403 and a second secondary terminal 1404 which are coupled with a load 1200 and an auxiliary circuit 1430 comprising an auxiliary switch 1431 and an auxiliary capacitor 1432, wherein the auxiliary switch 1431 is connected in series with the auxiliary capacitor 1432.

In addition, the converter 1400 comprises a charge storage circuit 1440 comprising an output capacitor 1441 and as an optional feature a diode 1442, wherein the output capacitor 1441 is arranged between the first and second secondary terminal, and wherein the charge storage circuit 1440 and the auxiliary circuit 1430 are connected in parallel to the secondary winding of the multi-winding inductor 1410.

Controller 1450 may comprise the same or corresponding features and functionalities as controllers 150 and/or 250 and vice versa. As an example, controller 1450 is a feedback controller.

As an optional feature, the system further comprises a main switch driver 1100, for example in the form of a main FET driver. The main switch driver 1100 may be configured to receive, via input terminal 1101, a comparison signal such as a sawtooth signal, for giving a fixed frequency signal to the main switch. Alternatively, such a signal may be provided to the controller 1450 or a subcontroller of controller 1450, e.g. arranged between input 1101 and driver 1100, e.g. as a part of the feedback control for example receiving a or the control signal of controller 1450 instead of directly the driver.

It is to be noted that there may be no particular importance for the shape of a respective trigger signal for the main switch, e.g. main FET. The POP (Periodic Operating Point) trigger is the software tool to get the stable result shortly.

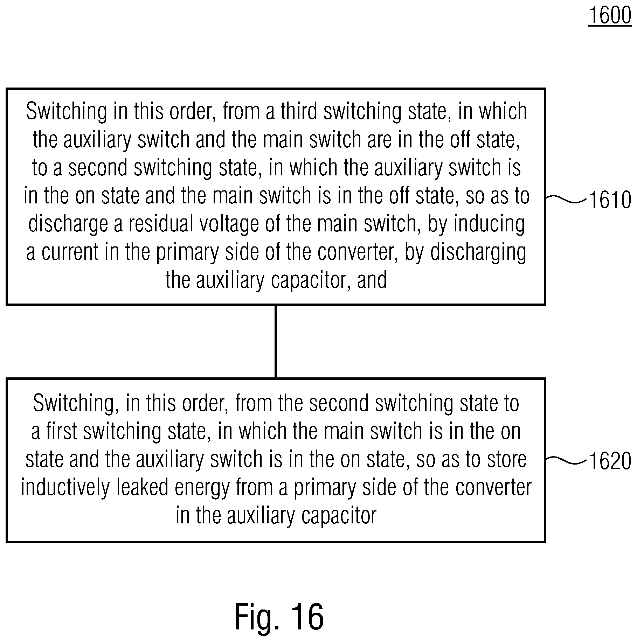

Fig. 16 shows a schematic block diagram of a method for controlling a converter according to an embodiment. The method 1600 comprises switching 1610 the converter, in this order, from a third switching state, in which the auxiliary switch 1431 and the main switch 1420 are in the off state, to a second switching state, in which the auxiliary switch is in the on state and the main switch is in the off state, so as to discharge a residual voltage of the main switch, by inducing a current in the primary side of the converter 1400, by discharging the auxiliary capacitor 1432.

The method further comprises switching, 1620, in this order, from the second switching state to a first switching state, in which the main switch is in the on state and the auxiliary switch is in the on state, so as to store inductively leaked energy, e.g. leaked from the primary winding to the secondary winding of the converter, from a primary side of the converter in the auxiliary capacitor.

In particular, method 1600 may, optionally, comprise switching the converter, in this order, from the first switching state to a fourth switching state, in which the auxiliary switch is in an off state and the main switch is in an on state, and from the fourth switching state to the third switching state.

Further remarks

With this proposed solution, the ZVS implementation according to embodiments can be suitable for wide range of application.

With this proposed solution, AC/DC power conversion systems according to embodiments can ensure ZVS soft switching at higher bus voltage and relatively lower output voltage.

Embodiments may in particular address technical areas related to switching mode power supply and/or AC/DC power conversion. Hence, embodiments comprise switching mode power supplies and/or converters for AC/DC power conversion.

In particular, embodiments may be used in the application area of switching mode power supply for consumer, industry application.

Furthermore, embodiments enable higher power conversion efficiency, and hence reduction of $CO_2$ emission.

In the following embodiments are summarized.

Embodiments comprise a converter (100, 200, 1400) comprising a first primary terminal (101, 201, 1401) and a second primary terminal (102, 202, 1402) for coupling the converter with a voltage source (300, 1300); a multi-winding inductor (110, 210, 1410) comprising a primary winding (111, 1411) and a secondary winding (112, 1412); a main switch (120, 220, 1420); wherein the primary winding and the main switch are connected in series between the first and second primary terminal; a first secondary terminal (103, 203, 1403) and a second secondary terminal (104, 204, 1404) for coupling the converter with a load (1200); an auxiliary circuit (130, 230, 1430) comprising an auxiliary switch (131, 231, 1431) and an auxiliary capacitor (132, 232, 1432), wherein the auxiliary switch is connected in series with the auxiliary capacitor; a charge storage circuit (140, 240, 1440) comprising an output capacitor (241, 1441), wherein the output capacitor is arranged between the first and second secondary terminal; wherein the charge storage circuit and the auxiliary circuit are connected in parallel to the secondary winding of the multi-winding inductor.

According to an embodiment and/or in particular one of the above discussed embodiments, optionally, the auxiliary circuit (130, 230, 1430) is configured to store inductively leaked energy from a primary side of the converter in the auxiliary capacitor (132, 232, 1432), when the main switch (120, 220, 1420) is in an on state; and the auxiliary circuit is configured to discharge a residual voltage of the main switch, by inducing a current in the primary side of the converter, by discharging the auxiliary capacitor, when the auxiliary switch (131, 231, 1431) is in the on state and when the main switch is in an off state.

Embodiments comprise a controller (150, 250, 1450) for controlling a converter (100, 200, 1400) according to an embodiment and/or in particular one of the above discussed embodiments, when the converter is coupled with the voltage source (300, 1300) via the first and second primary terminal; wherein the controller is configured to set the main switch (120, 220, 1420) to an on state in order to store energy in the multi-winding inductor (110, 210, 1410) and to set the main switch to an off state in order to charge the charge storage circuit using energy stored in the multi-winding inductor.

According to an embodiment and/or in particular one of the above discussed embodiments, optionally, the controller is configured to, in a first switching state of the converter (100, 200, 1400), set the main switch (120, 220, 1420) to the on state and the auxiliary switch (131, 231, 1431) to the on state, so as to store inductively leaked energy from a primary side of the converter in the auxiliary capacitor (132, 232, 1432); and in a second switching state of the converter, set the auxiliary switch to the on state and the main switch to the off state, so as to discharge a residual voltage of the main switch, by inducing a current in the primary side of the converter, by discharging the auxiliary capacitor.

According to an embodiment and/or in particular one of the above discussed embodiments, optionally, the controller is configured to switch the converter (100, 200, 1400), in this order, from a third switching state, in which the auxiliary switch (131, 231, 1431) and the main switch (120, 220, 1420) are in the off state, to the second switching state, and from the second switching state to the first switching state.

According to an embodiment and/or in particular one of the above discussed embodiments, optionally, the controller is configured to switch the converter (100, 200, 1400), in this order, from the first switching state to a fourth switching state, in which the auxiliary switch (131, 231, 1431) is in an off state and the main switch (120, 220, 1420) is in an on state, and from the fourth switching state to the third switching state.

According to an embodiment and/or in particular one of the above discussed embodiments, optionally, the controller is configured to control the converter (100, 200, 1400) so that the converter cycles through the switching states periodically.

According to an embodiment and/or in particular one of the above discussed embodiments, optionally, the controller is configured to switch the converter (100, 200, 1400) from the third switching state to the second switching state based on an information indicating a voltage peak of the auxiliary switch (131, 231, 1431).

According to an embodiment and/or in particular one of the above discussed embodiments, optionally, the controller is configured to switch the converter (100, 200, 1400) from the second switching state to the first switching state based on an information indicating that a voltage of the auxiliary capacitor (132, 232, 1432) reached a local minimum.

According to an embodiment and/or in particular one of the above discussed embodiments, optionally, the controller is configured to switch the converter (100, 200, 1400) from the first switching state to the fourth switching state, in which the auxiliary switch (131, 231, 1431) is in an off state and the main switch (120, 220, 1420) is in an on state, based on an information indicating that a gradient of a voltage of the auxiliary capacitor (132, 232, 1432) is below a threshold.

Embodiments comprise a converter system (1500) comprising a converter (100, 200, 1400) according to an embodiment and/or in particular one of the above discussed embodiments and a controller (150, 250, 1450) for controlling the converter according to an embodiment and/or in particular one of the above discussed embodiments.

According to an embodiment and/or in particular one of the above-discussed embodiments, optionally, the converter system is a flyback converter for AC/DC power conversion; and the controller is a feedback controller.

Embodiments comprise a method (1600) for controlling a converter according to an embodiment and/or in particular one of the above discussed embodiments, wherein the method comprises switching (1610, 1620) the converter (100, 200, 1400), in this order, from a third switching state, in which the auxiliary switch (131, 231, 1431) and the main switch are in the off state, to a second switching state, in which the auxiliary switch is in the on state and the main switch (120, 220, 1420) is in the off state, so as to discharge a residual voltage of the main switch, by inducing a current in the primary side of the converter, by discharging the auxiliary capacitor (132, 232, 1432), and from the second switching state to a first switching state, in which the main switch is in the on state and the auxiliary switch is in the on state, so as to store inductively leaked energy from a primary side of the converter in the auxiliary capacitor.

According to an embodiment and in particular one of the above discussed embodiments, optionally, the method further comprises switching the converter (100, 200, 1400), in this order, from the first switching state to a fourth switching state, in which the auxiliary switch (131, 231, 1431) is in an off state and the main switch (120, 220, 1420) is in an on state, and from the fourth switching state to the third switching state.

Embodiments comprise a computer program for performing the method (1600) according to an embodiment and/or in particular one of the above discussed embodiments, when the computer program runs on a computer.

<u>Implementation alternatives</u>

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a programmable computer or an electronic circuit. In some embodiments, one or more of the most important method steps may be executed by such an apparatus.

Depending on certain implementation requirements, embodiments can be implemented in hardware or in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments comprise a data carrier having electronically readable control signals, which are capable of cooperating with a programmable computer system, such that one of the methods described herein is performed.

Generally, embodiments can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment is, therefore, a computer program having a program code for performing one of the methods described herein, when the computer program runs on a computer.

A further embodiment is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitionary.

A further embodiment is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The apparatus described herein may be implemented using a hardware apparatus, or using a computer, or using a combination of a hardware apparatus and a computer.

The apparatus described herein, or any components of the apparatus described herein, may be implemented at least partially in hardware and/or in software.

The methods described herein may be performed using a hardware apparatus, or using a computer, or using a combination of a hardware apparatus and a computer.

The methods described herein, or any components of the apparatus described herein, may be performed at least partially by hardware and/or by software.

The above described embodiments are merely illustrative for the underlying principles. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

**Claims**

1. Converter (100, 200, 1400) comprising:

   a first primary terminal (101, 201, 1401) and a second primary terminal (102, 202, 1402) for coupling the converter to a voltage source (300, 1300);
   a multi-winding inductor (110, 210, 1410) comprising a primary winding (111, 1411) and a secondary winding (112, 1412);
   a main switch (120, 220, 1420);
   wherein the primary winding and the main switch are connected in series between the first and second primary terminal;
   a first secondary terminal (103, 203, 1403) and a second secondary terminal (104, 204, 1404) for coupling the converter with a load (1200);
   an auxiliary circuit (130, 230, 1430) comprising an auxiliary switch (131, 231, 1431) and an auxiliary capacitor (132, 232, 1432), wherein the auxiliary switch is connected in series with the auxiliary capacitor;

a charge storage circuit (140, 240, 1440) comprising an output capacitor (241, 1441), wherein the output capacitor is arranged between the first and second secondary terminal;
wherein the charge storage circuit and the auxiliary circuit are connected in parallel to the secondary winding of the multi-winding inductor.

2. Converter (100, 200, 1400) according to claim 1,

wherein the auxiliary circuit (130, 230, 1430) is configured to store inductively leaked energy from a primary side of the converter in the auxiliary capacitor (132, 232, 1432), when the main switch (120, 220, 1420) is in an on state; and
wherein the auxiliary circuit is configured to reduce a residual voltage of the main switch, by inducing a current in the primary side of the converter, by discharging the auxiliary capacitor, when the auxiliary switch (131, 231, 1431) is in the on state and when the main switch is in an off state.

3. Controller (150, 250, 1450) for controlling a converter (100, 200, 1400) according to one of the preceding claims, when the converter is coupled with the voltage source (300, 1300) via the first and second primary terminal;
wherein the controller is configured to
set the main switch (120, 220, 1420) to an on state in order to store energy in the multi-winding inductor (110, 210, 1410) and to set the main switch to an off state in order to charge the charge storage circuit using energy stored in the multi-winding inductor.

4. Controller (150, 250, 1450) according to claim 3,
wherein the controller is configured to

in a first switching state of the converter (100, 200, 1400), set the main switch (120, 220, 1420) to the on state and the auxiliary switch (131, 231, 1431) to the on state, so as to store inductively leaked energy from a primary side of the converter in the auxiliary capacitor (132, 232, 1432); and
in a second switching state of the converter, set the auxiliary switch to the on state and the main switch to the off state, so as to reduce a residual voltage of the main switch, by inducing a current in the primary side of the converter, by discharging the auxiliary capacitor.

5. Controller (150, 250, 1450) according to claim 4,

wherein the controller is configured to switch the converter (100, 200, 1400) from a third switching state, in which the auxiliary switch (131, 231, 1431) and the main switch (120, 220, 1420) are in the off state, to the second switching state, and
wherein the controller is configured to switch the converter (100, 200, 1400) from the second switching state to the first switching state after the converter has been switched from the third to the second switching state.

6. Controller (150, 250, 1450) according to claim 5,

wherein the controller is configured to switch the converter (100, 200, 1400) from the first switching state to a fourth switching state, in which the auxiliary switch (131, 231, 1431) is in an off state and the main switch (120, 220, 1420) is in an on state, and
wherein the controller is configured to switch the converter (100, 200, 1400) from the fourth switching state to the third switching state after the converter has been switched from the first to the fourth switching state.

7. Controller (150, 250, 1450) according to claim 6,
wherein the controller is configured to control the converter (100, 200, 1400) so that the converter cycles through the switching states periodically.

8. Controller (150, 250, 1450) according to one of claims 5 to 7,
wherein the controller is configured to switch the converter (100, 200, 1400) from the third switching state to the second switching state based on an information indicating a voltage peak of the auxiliary switch (131, 231, 1431).

9. Controller (150, 250, 1450) according to one of claims 5 to 8,
wherein the controller is configured to switch the converter (100, 200, 1400) from the second switching state to the first switching state based on an information indicating that a voltage of the auxiliary capacitor (132, 232, 1432) reached a local minimum.

10. Controller (150, 250, 1450) according to one of claims 5 to 9,
wherein the controller is configured to switch the converter (100, 200, 1400) from the first switching state to the fourth switching state, in which the auxiliary switch (131, 231, 1431) is in an off state and the main switch (120, 220, 1420) is in an on state, based on an information indicating that a gradient of a voltage of the auxiliary capacitor (132, 232, 1432) is below a threshold.

11. Converter system (1500) comprising a converter (100, 200, 1400) according to one of claims 1 to 2 and a controller (150, 250, 1450) for controlling the converter according to one of claims 3 to 10.

12. Converter system (1500) according to claim 11, wherein the converter system is a flyback converter for AC/DC power conversion; and
wherein the controller is a feedback controller.

13. Method (1600) for controlling a converter according to one of claims 1 to 2, the method comprising:
switching (1610, 1620) the converter (100, 200, 1400), in this order,

from a third switching state, in which the auxiliary switch (131, 231, 1431) and the main switch are in the off state, to a second switching state, in which the auxiliary switch is in the on state and the main switch (120, 220, 1420) is in the off state, so as to discharge a residual voltage of the main switch, by inducing a current in the primary side of the converter, by discharging the auxiliary capacitor (132, 232, 1432), and
from the second switching state to a first switching state, in which the main switch is in the on state and the auxiliary switch is in the on state, so as to store inductively leaked energy from a primary side of the converter in the auxiliary capacitor.

14. Method according to claim 13, further comprising:
switching the converter (100, 200, 1400), in this order,

from the first switching state to a fourth switching state, in which the auxiliary switch (131, 231, 1431) is in an off state and the main switch (120, 220, 1420) is in an on state, and
from the fourth switching state to the third switching state.

15. A computer program for performing the method (1600) according to one of claims 13 or 14, when the computer program runs on a computer.

Fig. 1

Fig. 2

Fig. 3

Fig. 4

$$n_{Tqr} = 1$$

$$\pi\sqrt{Lp \times Cp}$$

$$\pi\sqrt{Lr \times \dfrac{\dfrac{Cz}{n^2} \times Cp}{\dfrac{Cz}{n^2} + Cp}}$$

$$\pi\sqrt{\dfrac{Lr \times Lp}{Lr + Lp} \times \dfrac{Cz}{n^2}}$$

## Fig. 5

Fig. 5

$$n = \frac{Np}{Ns}$$

## Fig. 6

Fig. 6

Fig. 7

Fig. 8

Fig. 9

between T1 and T2:
while ZVS FET is turning on, Main FET is turning off

## Fig. 10
(Part 1)

$Vpcz\ 01(T1) = Vpcz$
$Cz'$ initial voltage at T1

$Vcp\ 01(T1) = Vin - nVo$
$Cp'$ initial voltage at T1

between T2 and T3:
while ZVS and Main FETs are turning on

Fig. 10
(Part 2)

e.g. if the top voltage is detected, the ZVS FET starts turning on

Tzvs_on

ZVS V$_{GS}$

Tshift

Main V$_{GS}$

I$_{zvs}$

I$_{PK}$

I$_{PRI}$

Vpcz

V$_{CZ}$

$\pi\sqrt{Lp \times Cp}$

$\pi\sqrt{Lr \times \dfrac{\frac{Cz}{2} \times Cp}{\frac{Cz}{2} + Cp}}$

n$_{Tqr}$ = 1

Vor

Vin

$\pi\sqrt{\dfrac{Lr \times Lp}{Lr + Lp} \times \dfrac{Cz}{n^2}}$

Main V$_{DS}$   T0   T1   T2   T3   T4

300

Lr   214

213

231   200

232

ZVS FET Vgs   242

$\dfrac{Co}{n^2}$

Lp

+ Vcz −

241

Vin

Main FET Vgs

Cp

220

$\dfrac{Cz}{n^2}$

SR_drain   GND

250

secondary controller

I_primary
I_secondary

primary ON
secondary OFF

both OFF

primary OFF
secondary ON

primary ON
secondary OFF

primary OFF
secondary ON

time

(VIN/N+VBUS_IN)

peak-dcz
sensing

SR_DRAIN

food-fwd
sensing

ZCD

negative-
sense
(+100 mV)

time

Fig. 11

e.g. the method is to derivative of the curve and seeking the slope is 0
which the voltage is less then Vpcz

Fig. 12

ZVS V$_{GS}$

Main V$_{GS}$

Tzvs_on

Tshift

I$_{zvs}$

I$_{PRI}$

I$_{PK}$

slope is 0

Vpcz

V$_{CZ}$

$n_{Tqr} = 1$

$\pi\sqrt{Lp \times Cp}$

$\pi\sqrt{Lr \times \dfrac{\dfrac{Cz}{n^2} \times Cp}{\dfrac{Cz}{n^2} + Cp}}$

Vor

Vin

$\pi\sqrt{\dfrac{Lr \times Lp}{Lr + Lp} \times \dfrac{Cz}{n^2}}$

Main V$_{DS}$

T0   T1   T2   T3   T4

Fig. 13

Fig. 14

Fig. 15

1600

Switching in this order, from a third switching state, in which the auxiliary switch and the main switch are in the off state, to a second switching state, in which the auxiliary switch is in the on state and the main switch is in the off state, so as to discharge a residual voltage of the main switch, by inducing a current in the primary side of the converter, by discharging the auxiliary capacitor, and — 1610

Switching, in this order, from the second switching state to a first switching state, in which the main switch is in the on state and the auxiliary switch is in the on state, so as to store inductively leaked energy from a primary side of the converter in the auxiliary capacitor — 1620

Fig. 16

## EUROPEAN SEARCH REPORT

Application Number

EP 24 16 0724

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 103 595 092 A (ELEC POWER RES INST GUANGDONG) 19 February 2014 (2014-02-19) * paragraph [0031] - paragraph [0035]; figure 3 * | 1-15 | INV. H02M3/335 H02M1/34 H02M1/00 |
| X | CN 115 102 408 A (UNIV XIAMEN TECHNOLOGY) 23 September 2022 (2022-09-23) * paragraph [0030] - paragraph [0039]; figure 5 * | 1-15 | |

TECHNICAL FIELDS SEARCHED (IPC)

H02M

The present search report has been drawn up for all claims

| Place of search | Date of completion of the search | Examiner |
|---|---|---|
| The Hague | 24 July 2024 | Zeljkovic, Sandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 0724

This annex lists the patent family members relating to the patent documents cited in the above-mentioned European search report.
The members are as contained in the European Patent Office EDP file on
The European Patent Office is in no way liable for these particulars which are merely given for the purpose of information.

24-07-2024

| Patent document cited in search report | Publication date | Patent family member(s) | Publication date |
|---|---|---|---|
| CN 103595092 A | 19-02-2014 | NONE | |
| CN 115102408 A | 23-09-2022 | NONE | |

EPO FORM P0459

For more details about this annex : see Official Journal of the European Patent Office, No. 12/82